Europäisches Patentamt

(19) European Patent Office

Office européen des brevets

(11) Publication number: **0 159 303**
**A2**

# (12) EUROPEAN PATENT APPLICATION

(21) Application number: 85850122.4

(22) Date of filing: 09.04.85

(51) Int. Cl.⁴: **A 23 C 19/032**

(30) Priority: 19.04.84 SE 8402224

(43) Date of publication of application:
23.10.85 Bulletin 85/43

(84) Designated Contracting States:
AT BE CH DE FR GB IT LI NL

(71) Applicant: Arla, ekonomisk förening
Dalagatan 3
S-105 46 Stockholm(SE)

(72) Inventor: Hartman, Annika
Svärdsliljevägen 20
S-162 43 Vällingby(SE)

(72) Inventor: Söderhjelm, Petter
Döbelnsgatan 38 B
S-113 52 Stockholm(SE)

(72) Inventor: Fondén, Rangne
Sveavägen 106
S-113 50 Stockholm(SE)

(74) Representative: Avellan-Hultman, Olle
Avellan-Hultman Patentbyra AB P.O. Box 5366
S-102 46 Stockholm 5(SE)

(54) Method for manufacturing cheese having a reduced ripening time.

(57) A method for manufacturing cheese by which method the ripening time can be substantially reduced in spite of maintaining or improving such properties as taste, consistency, texture and appearance of the cheese, whereby in the manufacture of the cheese is added an enzym or an enzym mixture prepared by extraction from bacterial cultures of such type which are tradtionally used in cheese-making, whereby the enzym or the enzym mixture is added in an amount of between 0.001 and 1.5 percent by weight of the raw cheese before the addition of the rennet and/or before the moulding and pressing of the cheese. In the method are used preferably enzyms derived from cultures of Penicillium roqueforti, Penicillium camemberti, Penicillium caseicoleum, Bacterium linens, Propionibacterium shermanii, Streptococcus lactis etc. having a proteolytic activity, according to the definition given in the above specification, which is higher than 0.001. By the method are manufactured freferably irregular hole type cheeses, round-eyed cheeses or cheeses made from milk concentrated by ultrafiltration. The method also makes possible, by ultra filtration technology, the manufacture of cheeses of a new type having a very short ripening time for direct use after moulding and pressing or for later use in freeze dried state.

0159303

AVELLAN-HULTMAN PATENTBYRÅ AB
Ref.  P-947

Applicant:  Arla, ekonomisk förening, S-105 46 STOCKHOLM

Method for manufacturing cheese having a reduced ripening time.
------------------------------------------------------------------

The present invention generally relates to a method for manufacturing
cheese, and the invention is more particularly directed to a method for
manufacturing cheese having a reduced ripening time.

In traditional methods for manufacturing cheese the process is
started using a cheese milk which is acidified by means of a bacterial
culture. When making green or white mould cheeses a mould is also added.
The milk is then coagulated by using cheese rennet.  In some cases the
prepared cheese is also subjected to a surface treatment whereby a
bacterial culture is applied to the surface of the cheese.

The ripening and the taste of the cheese depend on different factors,
for instance the heating temperature during the process, the whey
drainage, the transformation of lactose to lactic acid etc.  When storing
the cheese for ripening, however, the decomposition of fats and proteins
are of greatest importance to the texture, the taste and the consistency
of the cheese.

The decomposition of fats to shorter fatty acids and other aroma
producing compounds and also the decomposition of the proteins, especially
the casein, to peptides and amino acids is provided for by means of
enzyms originating from the milk, enzyms from the added cheese rennet
and enzyms from the bacterial culture used in the process.

Storing the cheese to a degree of ripening suitable for sale takes
a long time for many types of cheeses and adds costs and problems including
relatively long advance planning of the cheese manufacturing process.
Therefore there is a wish to reduce the ripening time for the cheese, especially in the case of the above mentioned slow ripening cheeses.

It has been found that it is possible to radically reduce the ripening time in the cheese making process by adding to the curd certain enzyms or enzym mixtures prepared by extraction from microorganisms of the type traditionally used in the cheese making process, for instance Penicillium roqueforti, Penicillium caseicoleum, Penicillium camemberti, Streptococcus lactis, Bacterium linens, Propioni bacterium etc. Preferably extraction is made at pH 5.3-12.3 after partial purification of the bacterial cultures at pH 5,3-12.

By adding suitable enzyms or enzym mixtures when curdling the milk it has been shown possible to control both the ripening time and the taste of the cheese. Said enzyms or enzym mixtures may be added in one or more steps of the process but preferably they are added either to the cheese milk before adding the rennet or to the curd.

The purification of the enzym or the enzym mixture is made in a special process which is independent of the cheese manufacturing process itself and which will not be described in detail in this connection. It should, however, be mentioned that the enzyms which may be used in the present invention are prepared by selective cultivation of the bacterial strains used in traditional manufacture of cheese. These enzyms do not differ to any substantial extent from the enzyms which are present in the bacterial culture and are therefore normally present in the cheese.

It has also been shown that hard cheeses made according to the new method may get an improved quality, taste and consistency and is more juicy than cheese made according to traditional methods and that it is possible to maintain an even and high quality of the cheese and that the price for the cheese can be reduced thanks to the shortened ripening time.

According to the method a partially purified enzym or enzym mixture is added during the manufacture of the cheese. This enzym or enzym mixture is prepared by extraction from traditionally used cheese cultures like Penicillium roqueforti, Penicillium camemberti, Penicillium caseicoleum, Bacterium linens, Streptococcus lactis and other lactic acid bacteria, Propionibacterium shermanii and other propionic acid bacteria and in an amount of between 0.001 and 1.5 percent by weight as calculated on the raw cheese. These enzyms should have a protelytic activity which is higher than 0.001 activity units/ml as defined according to the following method:

Definition of protelytic activity of the enzym extract

A. Preparation of casein solution.

1 g of isoelectrically precipitated casein is diluted to 100 ml with 0.05 M NaOH (1% solution). The casein solution is dialyzed, at least for a night, against a buffer consisting of 0.05 M Na-acetate + 0.01 M NaCl. The buffer is adjusted to pH 5.5 with 10% acetic acid.

B. Agarose solution.

2 g agarose is dissolved in 98 g of 0.05 M Na-acetate + 0.1 M NaCl, pH 5.5. The solution is heated to boiling temperature while being stirred.

C. Moulding of plates.

Casein and agarose solutions are heated separately to 60-70°C. The hot casein solution (100 ml) is then poured into the hot agarose solution (100 g) under careful stirring. The agarose-casein solution is then quickly portioned into petri dishes having a diameter of 9 cm. A suitable volume of the solution per dish is 17 ml. The gel layer should be about 2 mm thick. The solution is sufficient for the preparation of ten plates. When the mixture in the cups has solidified 17 ml of 0.010 M calcium chloride per dish is poured over the gels. The plates are allowed to stand at least overnight. The calcium chloride solution is then poured off and holes are punched in the gels. The gel to be removed is taken up for instance by means of a pasteur pipette connected to a water suction device. A suitable number of holes in each plate is 9 having a diameter of 4-6 mm. Each hole has a volume of 40-60 $\mu$l.

D. Testing the proteolytic activity of the enzym extract.

The enzym extracts are tested both non-diluted and diluted 2, 10, 20, 40 and 100 times. The enzym extract is poured into the holes of the agarose plates, and the plates are allowed to stand at 37°C for 24 hours before the result is checked.

E. Evaluating the result.

The area of the diffusion zone obtained after incubation at 37°C for 24 hours is calculated. The size of the area is proportional to the proteolytic activity whereby there is a double-logarithmic relation. One proteolytic unit may be defined as a zone having an area of 388 mm$^2$ under the above described conditions.

The proteolytic activity of the enzym extract is of importance when manufacturing cheese according the invention including an addition of enzym extract in order to decrease the ripening time and possibly obtain an improved cheese quality. Tests have shown that a proteolytic activity of less thank 0.001 activity unit according to the above definition does not cause any noticeable reduction of the ripening time for the cheese or any noticable improvement of the cheese quality. On the other hand, the proteolytic activity preferably should not exceed 100 activity units since in such a case it may be difficult to control the ripening process because the proteins are decomposed too quickly.

Generally the cheese-making process according to the invention may be illustrated by the following flow diagram:

1. Pre-treatment of the milk

2. Traditional additions

Step I       3. Addition of enzym, alt. I

4. Rennetting

5. Coagulum cutting

6. Pre-stirring

7. Whey drainage

Step II      8. Heating

9. Post-stirring

      10.  Addition of enzym, alt. II

      11.  Moulding the curd

      12.  Pressing

      13.  Brine treatment of the cheese

<u>Step III</u>      14.  Storage for ripening

The different steps are to be commented in the following:

1. The pre-treatment of the milk means that the milk is purified by being pasteurized or bactofugated thereby removing coli bacteria, butyric acid bacteria, putrefactive bacteria, yeasts and moulds. Further the cheese milk is standardized so as to reach the intended fat content for the actual type of cheese to be made. To the cheese milk also is added, at this stage, a starter culture which may be lactic acid or propionic acid bacteria.

2. At this stage there is a conventional addition of different substances like calcium chloride, sodium nitrate, disodium phosphate, etc.

3. At this stage and/or at the following stage 10 there is an addition according to the invention of enzym or an enzym mixture of the above defined type.

4. Cheese rennet is added at this stage.

5. At the cutting step the coagulum is cut into pieces to enable or facilitate the subsequent stirring.

6. At the pre-stirring step the cut coagulum is stirred to force the whey out of the curd.

7. After the whey has been forced out of the curd, whey is drained in an amount corresponding to 35-50% of the original volume of the cheese milk.

8. The curd is then heated to a temperature of about 35-40°C with or without an addition of water, and

9. At the follwoing stage a post-stirring is made to force out an additional amount of whey.

10.  After post-stirring and further whey drainage, enzym may be added according to the invention as an alternative to the addition at stage 3.

11.  The curd is now ready for moulding,

12.  and pressing, whereby further whey is pressed out, usually in two consecutive steps with an intermediate turning of the cheese.  The pressing may vary from a few hours to about 24 hours.

13.  After the curd has been formed and pressed the prepared cheese is generally brine treated, whereby the cheese is put in a brine solution for one or more days.

14.  Finally the cheese is left for ripening, whereby fat is partly converted to short fatty acids and other aroma generating compounds, and protein is partly converted to peptides and amino acids.

The ripening time is different for different types of cheese.  The types of cheese which are of primary interest for the present invention are a) an irregular hole type of cheese which traditionally made has a ripening time of 3-10 months (of the type "Prästost" or "Svecia"), b) an irregular hole type of cheese having a ripening time when made according to traditional methods of about 2 weeks - 3 months (of the type "Hushållsost" or Swedish Port Salut), c) a round-eyed cheese having a ripening time as traditionally manufactured of about 3-10 months (of the type "Herrgårdsost" or "Grevé"), and d) a quickly ripening cheese made by a process involving ultra filtration technology which, by the method according to the invention, may be made in about 24 hours and which as far as known has no equivalence in traditional cheese making.

For different types of cheese preferably different types of enzym extracts or enzym extract mixtures are used, and the extract is added in amounts of between 0.001 and 1.5 percent by volume.  Upon addition of a suitable amount of enzym or enzym extract a cheese is obtained which becomes ripe in only half of the time or even quicker compared with the ripening time for traditionally manufactured cheese.  In spite of this substantially reduced ripening time the cheese has a quality which is as high as or even higher than that of cheese manufactured according to traditional methods, and which has a taste, consistency, texture and an appearance which is quite comparable to traditionally manufactured cheese. Depending on the reduced ripening time cheeses made according to the invention can get a higher content of liquid, and this can be considered an advantage in that the cheese is more juicy than the corresponding traditionally manufactured cheese.

As stated in the flow diagram on pages 4-5 the enzym or enzym mixture may be added either at stage 3 before the addition of cheese rennet or at stage 10 before the moulding and pressing of the cheese or possibly at both stages. By adding the enzym in advance of the addition of cheese rennet a very even distribution of the enzym mixture in the coagulum is obtained, but when draining the whey part of the added enzym is thereby also removed and therefore it may be difficult to dose the correct amount of enzym. When adding the enzym after the whey drainage step, the heating step and the post-stirring step a safety is obtained in that the correct amount of enzym has been added, but on the other hand there may be some difficulties in obtaining an even distribution of the enzym in the curd. It is within the scope of the invention to add a certain amount of enzym or enzym mixture at step 3 of the flow diagram, to check the enzym content after step 9 and to add a supplementary amount of enzym in the following step, viz. step 10.

The proteolytic activity of the enzym or the enzym mixture is of importance for the ripening time of the prepared cheese. An activity too low results in a smaller increase of the ripening speed than desirable and necessitates an uneconomically high addition of enzym or enzym mixture. An activity too high, on the other hand, gives such a quick break down of the protein that it may be difficult to control and check the ripening process. Practical tests have shown that the enzym activity for said reasons should not be lower than 0,001 and not higher than 100 activity units/ml according to the above definition.

Different enzyms require different pH values for the extraction thereof and for being used in the cheese manufacturing process according to the invention. For the above mentioned enzyms or enzym mixtures of interest the relevant pH values are between 5.3 and 11.3. For pH values outside of said limits a too low activity and too poor reduction of the ripening time is obtained. Often taste defects or unwanted off-flavours of the finished cheese are obtained.

The invention is now to be described more in detail with reference to several examples thereof. It is, however, to be understood that the given examples are of illustrative nature only and that different modifications of the method may be presented within the scope of the appended claims.

## EXAMPLE 1

### (Irregular hole cheese of "Prästost" type)

An irregular hole cheese of "Prästost" type was made by the method according to the invention. Non-treated milk was separated and pasteurized at $72^{0}C$ for 15 seconds. The fat content was checked and adjusted to 3.7 %. The cheese-milk was heated to $32.5^{0}C$ and was allowed to ripen for 35 minutes. At the ripening process the protein was stabilized and this may be advantageous, especially when using cooled milk.

To the cheese-milk was added 1% of a starter culture containing the bacterium Streptococcus lactis. After 30 minutes a sufficient amount of cheese rennet was added to make the milk coagulate within a period of 25-30 minutes. In this case about 0.035 % of cheese rennet was added. The coagulum was cut by means of a 9 mm cutting tool, and the curd was carefully stirred for about 10 minutes to make the whey separate. The curd was then heated to $40^{0}C$ over a period of 30 minutes and during the heating operation the stirring activity was gradually increased. When the curd had reached $40^{0}C$ the whey was drained so that the remaining volume of curd and whey was about half of the original volume. To the remaining curd and whey was added about 20% water as calculated on the original volume. The water had a temperature of about $37^{0}C$. The curd was stirred for about 60 minutes. Whey was once more drained so that the curd occupied about half of the original volume and then about 15 g salt was added as calculated per kg of raw cheese.

At this stage was also added 0.6 % (by weight of the amount of solid cheese) of an enzym solution of Penicillium roqueforti having a pH value of 11.3 and having a proteolytic activity of 1.0. The enzym was carefully stirred into the curd.

The curd was then formed and pressed at a pressure of about 170 kPa (1.7 kg/cm$^2$). After one hour of pressing the cheese was turned upside down and was pressed for another 10-12 hours at a pressure of 150-170 kPa (1.5-1.7 kg/cm$^2$).

Thereafter the cheeses were put into salt brine and were kept there for two days at a temperature of 11$^o$C. The cheeses were then left to pre-ripen in a heated storage room for about 20 days at a temperature of about 21$^o$C whereupon they were coated with paraffin and were placed for final ripening at a temperature of 11$^o$C.

After three months samples were taken from the cheeses and were compared with the same type of cheese made according to traditional methods. It turned out that the cheeses made according to the present example had a clearly better ripeness as compared with cheeses made according to traditional methods and stored for the same period of time, and that a cheese made according to the present example had a ripeness after three months of storage which was comparable to traditionally manufactured cheeses stored for six months. Thus the ripening time had practically been reduced by 50%. It was also shown that cheeses made according to the present invention had a good and characteristic taste which was quite comparable to the taste of the cheese made according to traditional methods. Some persons of a taste panel judged the cheese made according to the invention even as having a better taste than the conventionally made cheese, and the taste panel judged the cheese according to the invention to be more juicy depending on the increased content of liquid. Apart from the good taste the cheeses made according to the invention were judged as having a good consistency, texture and appearance.

A number of tests were made to manufacture cheeses like in example 1 but with differnt enzyms and enzym mixtures and also different enzym contents. Different amounts of the different enzyms were required to obtain the same good properties as in example 1. A low content of enzym or enzym mixture gave only an insignificant reduction of the ripening time and a high content of enzyms or enzym mixtures might give unwanted effects like a slightly bitter off-flavour, a slightlt grainy cheese or a cheese having too large holes for the type of cheese in question. For the different enzyms mentioned above the following quantity ranges may be mentioned:

Penicillium roqueforti between 0.6 and 1.5 % addition

Penicillium camemberti between 0.1 and 0.4 % addition

Penicillium caseicoleum between 0.2 and 0.4 % addition Streptococcus lactis about 0.5 % addition.

A tabulation of the above example 1 and nine further examples of manufacture according to the invention of cheeses of "Prästost" type is given in table I below:

Table I

(irregular hole type of cheese like "Prästost" or "Svecia")

| Example | Additive | | pH | Proteolytic activity | Remarks |
|---|---|---|---|---|---|
| | type | content | | | |
| 1 | P. roq. | 0.6 | 11.3 | 1.0 | good characteristic taste; ripeness at 3 m = 6 m for trad. made cheese |
| 2 | P. roq. | 0.9 | 8.3 | 1.0 | good taste; quicker ripening than in ex. 1 |
| 3 | P. roq. | 0.7 | 8.3 | 1.0 | like in example 2 |
| 4 | P. roq. | 0.7 | x) | 1.0 | x) cultivation pH |
| 5 | P. roq. | 1.5 | x) | 0.5 | x) cult. pH; at 3 m a slightly stale taste, slightly grainy cons. |
| 6 | P. cam. | 0.4 | 11.3 | 1.2 | good char. taste. ripeness at 3 m. = 6 m conv. cheese |
| 7 | P. cam. | 0.1 | 8.3 | 2.0 | good taste; slower ripening than in ex. 6 |
| 8 | P. cas. | 0.4 | 9.2 | 0.9 | like in example 1 |
| 9 | P. cas. | 0.2 | 9.2 | 0.9 | good taste; slightly slower ripening than in ex. 8 |
| 10 | S. lac. | 0.5 | 10.0 | 0.8 | like in example |

## EXAMPLE 11

(Irregular hole type cheese like "Swedish Port Salut")

An irregular hole type cheese having a short ripening time and being of the type "Hushållsost" was made as follows. The milk was separated and pasteurized at 72°C for 15 seconds. To the cheese-milk was added 0.8% of a starter culture, sodium nitrate (15 g/100 kg milk) and calcium chloride (10 g/100 kg milk). The fat content was checked and adjusted to 2.9%. The cheese milk was heated gradually to 32°C while stirring slowly. After about 25 minutes said temperature had been reached and cheese rennet was added in an amount of 0.03%. After the rennet had acted for 40 minutes the coagulum was cut by means of a 12 mm cutting tool. The cut coagulum was pre-stirred for 15 minutes, whereafter whey was drained for a first time to 65% of the original volume. The stirring was intensified and the coagulum was heated to about 40°C, taking a time of about 15 minutes. Whey was once again drained to leave about 35% of the original volume. The stirring activity was then further increased and after 10 minutes salt was added corresponding to about 1 % by weight of raw cheese and water corresponding to 9% of the original volume .

After stirring for another 10 minutes 0.001 % of enzym was added as calculated by weight of raw cheese, the enzym being of the Penicillium roqueforti type. The activity of the enzym was 0.1 according to the above definition. Thereafter the curd was formed to an about 4 dm thick and was pre-pressed for 5 minutes at a pressure of 150 kPa. The curd was cut into blocks which were put into forms pressed for 20 minutes at a pressure of 650 kPa, were turned and pressed for another 25 minutes at the same pressure. The cheeses were brine salted for 9 hours in a sprinkling, circulating system (for instance the Gadan-system), whereupon they were coloured with Anatto, were pimaricin treated and stored for 24 hours at 10-12°C before being packed. The cheeses were allowed to rest for at least one week before being distributed. The cheeses had a keeping quality of about 3 months.

The cheese thus manufactured had a ripe taste and a very good consistency already after having been stored for one week. This is a substantially shorter time than that of an equivalent cheese made according to traditional methods. After about 3 weeks of storage the cheese had an increased degree of ripening (towards well ripened) and a good taste and consistency.

## EXAMPLE 12

Example 11 was repeated but with the difference that the amount of the enzym from P. roqueforti was increased ten times to 0.01 % by weight of raw cheese. After one week of storage the cheese had a good consistency and a slightly better state of ripening than in example 1. After another two weeks of storage a slightly bitter taste and possibly some over-ripe taste could be noted.

## EXAMPLE 13

Example 11 was repeated but with the difference that the enzym was prepared from Bacterium linens and was added in an amount of 0.01 % as calculated on the weight of raw cheese. The enzym had an acitivity of 1.1. The manufacture was carried out as in example 11 and gave an equivalent result in the form of quicker ripening as compared with traditional manufacture of this type of cheese and with quite equivalent taste and consistency.

## EXAMPLE 14

For comparative purposes a cheese was made like in example 13, but the amount of the enzym from B. linens was increased to 0.06 %. The ripening occured only insignificantly quicker than in example 1, and the taste and the consistency were equivalent.

## EXAMPLE 15

For further comparative purposes a cheese was made like in example 14, but the amount of enzym was increased to 0.12 % by weight of raw cheese.  Only an insignificant increase in the rate of ripening time could be noted.  The cheese was, however, slightly grainy and obtained an otherwise not quite acceptable consistency and taste.

## EXAMPLE 16

The same method as in example 13 was repeated but with an enzym prepared from Steptococcus lactis and having an enzym activity of 0.4. The enzym was added in an amount of 0.02 % by weight of raw cheese, and already after one week of storage the cheese had a ripe and characteristic taste and a very good consistency.  Further storage for 2 and 3 weeks, respectively, gave an improved ripening without any non-typical off-flavour or change of consistency.

## EXAMPLE 17

The same method was repeated as in example 16, but the amount of enzym was increased 5 times to 0.1 % by weight of raw cheese.  The ripening followed quicker than in example 16.  After 1 and 2 weeks of storage the cheese had a good taste but a slightly bitter off-flavour with a character of over-ripeness.

## EXAMPLE 18

(Round-eyed cheese of "Herrgård" type)

After separation and pasteurization at 72°C for 15 seconds the cheese-milk was given an addition of 1.2 % of a starter culture, calcium chloride (15 g/100 kg milk), sodium nitrate (15 g/100 kg milk) and disodium phosphate (10 g/100 kg milk). The fat content was checked and adjusted to 2.9 %. The cheese-milk was heated gradually and with slow stirring for 25 minutes to 30°C, whereafter 0.3 % of cheese rennet was added. After the rennet had acted for 30 minutes the coagulum was cut to relatively small pieces by means of a 9 mm cutting tool. After the curd been slowly pre-stirred for 45 minutes whey was drained to 60% of the original volume. The stirring activity was then slightly increased and the coagulum was heated graduslly to 35°C over a time of 30 minutes. The coagulum was stirred for 30 minutes at said temperature, whereupon water was added in an amount corresponding to 9 % of the original volume and the entire batch was then heated to 40°C over a period of 15 minutes. The curd was post-stirred for 10 minutes and an enzym of Propionibacterium shermanii having an activity of 1.6 was added. The enzym was added in an amount of 0.003 % by weight of raw cheese. The curd in the whey was then pressed for 25 minutes at a pressure of 650 kPa. The whey was pumped off and the curd was cut into pieces and was placed in cheese cloth lined moulds. The cheeses were thereafter pressed for 25 minutes at a pressure of 180 kPa, they were turned and were once again pressed for 12 hours. Thereafter the cheeses were allowed to rest for 12 hours being turned twice, whereupon they were brine treated for 4 days at 9-10°C. Then the cheeses were pimaricin treated and were dried at +12°C. After ten days the cheeses were coated with paraffin and were stored for ripening at 10°C. The cheeses were turned and paraffin treated every ten days. After three months samples were taken from the cheeses. They had a good taste and a good consistency and a ripeness which was substantially higher than that of corresponding cheeses made without any addition of enzym extract.

## EXAMPLES 19-21

The same method as in example 18 was repeated but with changed amount of enzym extract of P. shermanii:

Example 19: 0.01 % having an activity of 0.7;

Example 20: 0.10 % having an activity of 0.5;

0159303

Example 21: 1.00 % having an activity of 0.4.

In all cases the cheeses thereby obtained had a good taste. An increasing amount of added enzym extract slightly shortened the ripening time as compared with the time of example 18 and it could be established that an increased amount of added enzym extract did not prejudice the taste of the cheese. On the contrary it proved that a high addition of enzym extract might give the cheese a dauby consistency.

To assess advantages and disadvantages involved in an addition of the enzym extract in either of the two alternative steps according to the flow diagram on pages 4-5 a number of tests were made, two tests of which are presented in the following examples 22 and 23.

## EXAMPLE 22

Example 18 was repeated but with the difference that the same enzym extract from Propionibacterium shermanii as in example 18 was added in the same amount but before the addition of cheese rennet to the cheese-milk. Samples were taken after 3 months of storage and it was shown that the cheese had a good taste and a good consistency but slightly less ripeness than the cheese according to example 18. The reason for this is probably that part of the added enzym was removed when the whey was drained.

## EXAMPLE 23

Example 22 was repeated as far as to the step where the whey had just been drained. At this stage the enzym content was checked and it appeared that said content was less than what corresponds to the earlier addition thereof. To complete the content of enzym a further amount of the Propionibacterium enzym was added and the cheese was finally treated and stored. After 3 months samples were taken from the cheese which appeared to have the same good taste and consistency as in example 18. Possibly a slightly better ripeness could be noted compared with that of the cheese of example 18 and this may depend on the more even distribution of the enzym which is obtained when adding the enzym to the cheese-milk before adding the cheese rennet than when adding the enzym to the curd after the whey has been drained.

In the above examples cheeses of known types have been made from milk having a fat content of between 2.9 and 3.7 %. To investigate the possibility of making a new type of cheese having a good taste and a very short ripening time by adding enzym in accordance with the invention cheese-making trials involving ultra filteration equipment have been made. It has become obvious that with this technique it is possible to make a well tasting cheese having a ripening time as short as 24 hours. A couple of examples of this technique are presented in the following examples 24-26. The process basically follows the flow diagram of pages 4-5, but depending on the extremely short ripening time the cheese is ripened already after step 12 of the flow diagram.

### EXAMPLE 24

Milk having av fat content of 0.5 % was ultra filtered by a membrane filtering process to a protein content of 19.7 % and a dry matter content of 26.9 %. The fat content of the protein concentrate was adjusted to 21.5 % by an addition of cream having a fat content of 40 %. The mixture was pasteurized at 70°C and was homogenized, whereupon the temperature was adjusted to 41°C. To make the mixture acid a yoghurt starter culture was added in an amount of 3.5 % whereby the mixture was acidified to a pH value of about 6. To the acidified milk was added an enzym extract of Penicillium camemberti in an amount of 3 % by weight of curd. At the same time cheese rennet was added in a sufficient amount to achieve a coagulation in 10 minutes. The curd was allowed to ripen for 24 hours at 30°C, whereafter 1.5 % of salt was added as calculated on the weight of raw cheese. The curd was pressed in a cheese cloth lined mould for 30 minutes at a pressure of 900 kPa, whereafter it was turned and pressed for another 30 minutes.   In a first experiment the cheeses were packed in plastic material for direct use and in a second case they were freeze dried for use as a taste additive or as a cheese powder.   In both cases the usefulness of cheeses were good even without storing of the cheese.


## EXAMPLE 25


The same method as in example 24 was repeated but in this case the protein mixture was acidified to pH 5.9 by an addition of 1 % of Swedish sour milk.   The temperature of acidification was $32^{\circ}C$, and the enzym extract in this case was prepared from Penicillium roqueforti extracted at a pH of 8.3.   The enzym extract was added in an amount of 1 % by weight of raw cheese.   The result was equivalent to that of example 24.


## EXAMPLE 26


The same method as in example 25 was repeated but the P. roqueforti enzym extract was added in an amount of 2 %.   In this case the cheese ripened somewhat quicker than in example 25.   The taste and consistency of the cheese was quite equivalent to the cheese of example 25.

By ultra filteration of the milk in the last mentioned three examples a a good and suitable water content for the enzym extract is obtained which favourizes a quick ripening of the cheese.   Also, since a relatively high amount of enzym extract is added and the cheese is stored at such high temperature as about $30^{\circ}C$ the cheese becomes ripe very quickly and in spite thereof the cheese gets a pleasant taste and a good consistency.

## C L A I M S

1.  Method of manufacturing cheese having reduced ripening time, c h a r a c t e r i z e d by the addition, at the manufacturing of the cheese of an enzym or an enzym mixture prepared by extraction from microorganisms traditionally used in cheese making processes and having a proteolytic activity which is higher than 0.001 and which does not exceed 100 activity units/ml according to the definition in the above specification.

2.  Method according to claim 1, c h a r a c t e r i z e d in that the enzym or the enzym mixture is added in an amount of between 0.001 and 1.5 % by weight of the raw cheese.

3.  Method according to claim 1 or 2, c h a r a c t e r i z e d in that the enzym or enzym mixture is obtained by extraction of Penicillium roqueforti, Penicillium camemberti, Penicillium caseicoleum, Bacterium linens, Streptococcus lactis and other lactic acid bacteria or Propionibacterium shermanii and other priopionic acid bacteria.

4.  Method according to claim 3, c h a r a c t e r i z e d in that the extraction is made at a pH of between 5.3 and 12.3.

5.  Method according to any of claims 1-4, c h a r a c t e -
r i z e d in that the enzym or the enzym mixture is added after the cheese milk has been pretreated and before the cheese rennet is added or just before the moulding and pressing of the curd, or on both occasions.

6.  Method according to any of claims 1-5, c h a r a c t e -
r i z e d in that the proteolytic activity of the enzym or the enzym mixture is preferably between 0.1 and 2 according to the definition given in the above specification.

7.  Method according to any of claims 1-6, c h a r a c t e -
r i z e d in that the enzym of Penicillium roqueforti is added in an amount of between 0.6 and 1.5 % by weight of raw cheese, the enzym of Penicillium camemberti in an amount of 0.1-0.4 %, Penicillium caseicoleum in an amount of 0.2-0.4 %, and Streptococcus lactis in an amount of about 0.5 %, for manufacture of an irregular hole type cheese having a conventional ripening time of more than 3 months (of the type "Prästost" or "Sveciaost"), an irregular hole type cheese having a conventional ripening time of up to 3 months (of the type "Hushållsost" or Swedish Port Salut) or a round-eyed type cheese having a convention ripening time of more than 3 months (of the type "Herrgårdsost" or "Greveost").

8. Method according to any of claims 1-6, c h a r a c t e - r i z e d  in that the enzym of Penicillium camemberti, Penicillium roqueforti or Bacterium linens is added in an amount of between 1 and 3 % by weight of raw cheese when manufacturing a cheese having a very short ripening time (24 hours or a couple of days).

9. Method according to claim 8, c h a r a c t e r i z e d  in that the pretreatment of the milk is made by ultrafiltration, and in that the curd is allowed to ripen for 24 hours at a temperature of about 30°C, whereupon the cheese is moulded and pressed and may be used directly or may be freeze dried for later use.